# EUROPÄISCHE PATENTSCHRIFT

(11) **EP 3 175 204 B1**
(45) Veröffentlichungstag und Bekanntmachung des Hinweises auf die Patenterteilung: **23.12.2020**
(21) Anmeldenummer: 15739544.3
(22) Anmeldetag: 13.07.2015
(51) Int. Cl.: H01R 12/72, H01R 12/75, G01D 11/24

(54) **SENSOREINRICHTUNG FÜR EIN KRAFTFAHRZEUG**
SENSOR DEVICE FOR A MOTOR VEHICLE
MOYEN DE DÉTECTION POUR VÉHICULE AUTOMOBILE

(30) Priorität: 29.07.2014 DE 102014110643
(43) Veröffentlichungstag der Anmeldung: 07.06.2017
(73) Patentinhaber: Valeo Schalter und Sensoren GmbH, 74321 Bietigheim-Bissingen (DE)
(72) Erfinder: THOM, Jens, 74321 Bietigheim-Bissingen (DE); RACHUI, Dirk, 74321 Bietigheim-Bissingen (DE); SCHOEPE, Roman, 74321 Bietigheim-Bissingen (DE); BINDER, Bernd, 74321 Bietigheim-Bissingen (DE)
(74) Vertreter: Pothmann, Karsten
(86) Internationale Anmeldenummer: PCT/EP2015/065935
(87) Internationale Veröffentlichungsnummer: WO 2016/015981

(56) Entgegenhaltungen:
- WO-A1-2013/135432
- DE-A1-102011 017 747
- DE-U1- 20 314 848
- US-A1- 2009 183 558
- US-B1- 7 352 174

## Beschreibung

Die Erfindung betrifft eine Sensoreinrichtung für ein Kraftfahrzeug gemäß Patentanspruch 1.

Die DE 203 14 848 U1 beschreibt ein Elektronikbauelement mit einem wenigstens einen Sensor aufnehmenden Gehäuse und einem mit dem Sensor elektrisch verbundenen Stecker, welcher Kontaktelemente aufweist zum elektrischen Anschluss des Elektronikbauelementes an eine Einrichtung. Der Sensor ist dabei auf einer austauschbar in dem Gehäuse angeordneten, die elektrische Verbindung zwischen den Kontaktelementen des Steckers und dem Sensor bereitstellenden, Leiterplatte montiert. Die US 7 352 174 B1 beschreibt einen Rotationssensor bestehend aus zwei Permanentmagneten sowie einem korrespondierenden Hall-Sensor sowie eines Schalters. Ferner weist der Rotationssensor eine Platine auf, welche vom Sensorgehäuse nach außen geführt ist, um eine Kontaktierungsmöglichkeit durch Kontaktelemente zu realisieren. Das Gehäuse bildet ferner eine Aufnahme um die Kontaktierungsmöglichkeit herum.

Aus der DE 10 2011 017 747 A1 ist ein Steuergerät für ein Kraftfahrzeug bekannt, welches für eine Steckverbindung zwischen Sensoren und Steuergerät, Kontaktflächen auf einer Leiterplatte außerhalb des Steuergerätegehäuses aufweist, wobei die Leiterplatte des Steuergerätes von einem Innenbereich des Steuergerätegehäuses nach außen geführt wird. An der freiliegenden Leiterplatte kann dann eine Buchse bzw. ein Steckerelement mit entsprechenden Gegenkontakten aufgesteckt werden.

Die US 2009/0183558 A1 offenbart eine Sensorvorrichtung mit einem Sensorgehäuse welches einen abgewinkelten Flansch aufweist, in dem Kontaktelemente aus dem Sensorgehäuse herausgeführt sind, um einen Stecker mit der Sensorvorrichtung zu verbinden. Das Sensorgehäuse bildet dabei eine Steckeraufnahme für den Stecker.

Die WO 2013/135432 A1 beschreibt ein Steuergerät für ein Getriebe eines Fahrzeugs.

Das Steuergerät weist ein Gehäuse und eine Leiterplatte mit einem Bauelementebereich für elektrische Bauelemente sowie einem Kontaktierungsbereich mit einer Mehrzahl von elektrischen Kontakten zum Anschließen von weiteren Getriebesteuerungselementen auf. Das Steuergerät ist dadurch gekennzeichnet, dass der Bauelementebereich der Leiterplatte innerhalb des Gehäuses angeordnet ist und der Kontaktierungsbereich der Leiterplatte außerhalb des Gehäuses angeordnet ist. Dabei bildet der Kontaktierungsbereich der Leiterplatte einen Randstecker für eine Steckerbuchse aus.

Sensoreinrichtungen in Kraftfahrzeugen, insbesondere Sensoreinrichtungen mit Drehmoment- und Drehwinkelsensoren, sind üblicher Weise über eine elektrische Leitung mit einem Steuergerät, beispielsweise einer elektronischen Kontrolleinheit (ECU), verbunden. Meist ist hier eine Steckverbindung als Schnittstelle zwischen der elektrischen Leitung, insbesondere einem elektrischen Kabel, und der Sensoreinrichtung vorgesehen. Diese Steckverbindungen sind allerdings mit einem hohen Produktions- und Montageaufwand verbunden.

Es ist daher Aufgabe der vorliegenden Erfindung, eine Sensoreinrichtung für ein Kraftfahrzeug bereitzustellen, welche eine hinsichtlich des Produktions- und Montageaufwands vereinfachte elektrische Verbindung aufweist.

Diese Aufgabe wird erfindungsgemäß durch eine Sensoreinrichtung mit den Merkmalen des Patentanspruchs 1 gelöst. Vorteilhafte Ausgestaltungen der Erfindung mit zweckmäßigen Weiterbindungen sind Gegenstand der abhängigen Ansprüche.

Eine erfindungsgemäße Sensoreinrichtung für ein Kraftfahrzeug verfügt über ein Steckerelement, über welches eine elektrische Leitung unter Ausbildung einer Steckverbindung mit einer Steckeraufnahme auf Seiten einer Leiterplatte der Sensoreinrichtung elektrisch verbunden ist. Bei der elektrischen Leitung kann es sich um eine Datenleitung oder eine Stromversorgungsleitung handeln. Über die Steckverbindung werden elektrische Kontakte der Leitung mit elektrischen Kontakten der Leiterplatine elektrisch verbunden, also elektrisch gekoppelt. Um eine vereinfachte elektrische Verbindung zu erreichen, ist die Steckeraufnahme an der Leiterplatine vorgesehen und das Steckerelement unmittelbar mit der Leiterplatine elektrisch verbunden. Die Leiterplatine bildet also ganz oder zumindest teilweise die Steckeraufnahme. Dies hat insbesondere den Vorteil, dass sensoreinrichtungsseitig keine zusätzlichen Bauteile für die Steckverbindungen notwendig sind. Alle notwendigen Mittel zur elektrischen Kontaktierung auf Seiten der Leiterplatine befinden sich demzufolge direkt an bzw. auf dieser. Damit wird die Anzahl der erforderlichen Teile reduziert und insbesondere die im Allgemeinen erforderlichen geringen Positionstoleranzen der vielen Komponenten üblicher Systeme eingespart. Somit wird das System vereinfacht und insbesondere der Aufwand in Produktion und Montage reduziert.

Besonders vorteilhaft ist die Sensoreinrichtung dabei in einer Fahrgastzelle des Kraftfahrzeugs einsetzbar. Einen besonderen Vorteil bringen hier der verringerte Platzbedarf sowie die im Vergleich zu einem nicht zur Fahrgastzelle gehörigen Raum des Kraftfahrzeugs verringerten Anforderungen in Bezug auf Temperaturbeständigkeit und Verschmutzungsresistenz, sodass die Sensoreinrichtung für eine Vielzahl von Anwendungen die oben beschriebenen Vorteile nutzbar macht. Alternativ kann die Sensoreinrichtung jedoch auch in einem nicht zur Fahrgastzelle gehörigen Raum des Kraftfahrzeugs angeordnet sein. Dort kann der verringerte Platzbedarf zu einer Verringerung von potentiell schädlichen Außeneinwirkungen auf die Sensoreinrichtung führen.

Erfindungsgemäß ist vorgesehen, dass die Steckeraufnahme eine mit dem Steckerelement elektrisch kontaktierte Leiterbahn der Leiterplatine umfasst, insbesondere eine geätzte und/oder mittels eines photolithographischen Verfahrens geformte Leiterbahn. Das hat den Vorteil, dass alle zur elektrischen Kontaktierung erforderlichen Mittel sich direkt auf der Platine befinden und mit den restlichen Leiterbahnen der Leiterplatine im Rahmen der Layouterstellung erzeugt werden können. Somit sind in der Produktion keine zusätzlichen Montageanlagen wie Pressfit-Steckerpin-Setzmaschinen, Lötanlagen und dergleichen erforderlich. Eine vereinfachte Produktion und Montage ist die Folge.

Erfindungsgemäß ist vorgesehen, dass die Steckeraufnahme in einem Randbereich der Leiterplatine angeordnet ist. Insbesondere ist also der Abstand der Steckeraufnahme von einem Rand der Leiterplatte geringer als die Abmessungen der Steckeraufnahme, insbesondere als die Abmessungen der Steckeraufnahme parallel zu diesem Rand. Das hat den Vorteil, dass die Steckeraufnahme besonders leicht zugänglich ist und parallel zur Leiterplatine verlaufende Kabel nicht über diese hinweg geführt werden müssen. Auch bringt dies eine Platzersparnis mit sich.

Überdies kann das Steckerelement als Folge so gewählt werden, dass die Verbindung zwischen dem Steckerelement und einer Kabellitze der elektrischen Leitung vollautomatisch in Schneidklemmtechnik erfolgen, was die Produktion vereinfacht und Kosten spart.

Erfindungsgemäß ist vorgesehen, dass das Steckerelement den Randbereich der Leiterplatine mit jeweiligen Schenkeln umgreift. Das hat den Vorteil, dass eine kraftschlüssige Verbindung zwischen Leiterplatine und Steckerelement hergestellt wird und somit eine sichere Kontaktierung auch bei wechselnder mechanischer Beanspruchung der elektrischen Verbindung erfolgt.

In einer weiteren Ausführungsform ist vorgesehen, dass die Steckeraufnahme wenigstens eine die Leiterplatine durchsetzende Kontaktöffnung umfasst, in welche ein Kontaktstift des Steckerelements eingesteckt ist. Auch dies bringt den Vorteil einer formschlüssigen Verbindung zwischen Leiterplatine und Steckerelement mit der resultierenden sicheren Kontaktierung mit sich, sodass auch bei wechselnder, senkrecht zu den Kontaktstiften erfolgender mechanischer Beanspruchung der elektrischen Verbindung analog einer Pressfit-Verbindung eine zuverlässige elektrische Kontaktierung hergestellt ist.

Erfindungsgemäß ist vorgesehen, dass die Sensoreinrichtung ein Sensorgehäuse hat und das Sensorgehäuse eine Öffnung umfasst, durch welche das Steckerelement auf die Leiterplatine aufsteckbar ist. Die Öffnung befindet sich also in unmittelbarer Nähe der Steckeraufnahme an der Leiterplatine. Das hat den Vorteil, dass die Steckeraufnahme von außen zugänglich ist und die Sensoreinrichtung somit besonders einfach ohne eine notwendigerweise zuvor erfolgende elektrische Kontaktierung vormontierbar ist. Überdies kann so auch eine Zugentlastung der elektrischen Leitung realisiert werden, welche dann keine weiteren Komponenten an der Platine benötigt, sodass das Sensorgehäuse eine Doppelfunktion erfüllen kann.

Dabei kann in einer besonders vorteilhaften Ausführungsform vorgesehen sein, dass die Öffnung seitliche Führungsflächen für das Steckerelement aufweist. Das hat den Vorteil, dass ein Verrutschen des Steckerelements relativ zur Steckeraufnahme verhindert wird und ein genaues Positionieren bei einer Produktion beziehungsweise Montage erleichtert ist. Auch führt dies zu einem weiteren Einsparen von Bauteilen, da somit keine zusätzlichen Mittel zur genauen Positionierung in der Steckeraufnahme erforderlich sind.

Insbesondere kann hier vorgesehen sein, dass die Öffnung und das Steckerelement formschlüssig ausgeführt sind, sodass das Innere des Sensorgehäuses bei montiertem Steckerelement vor Staub, Verschmutzung oder sonstigen äußeren Einwirkungen geschützt ist.

Erfindungsgemäß ist vorgesehen, dass die Sensoreinrichtung zur Ermittlung von Parametern eines relativ zu der Sensoreinrichtung drehbaren Elements, welches eine Lenkspindel einer Lenksäule ist, vorgesehen ist und die Leiterplatine der Sensoreinrichtung im Wesentlichen senkrecht zur Drehachse des beweglichen Elements orientiert ist. Das hat den Vorteil, dass Platz in Richtung längs der Drehachse gespart wird. Gerade wenn die Steckeraufnahme in einem Randbereich der Leiterplatine angeordnet ist, kann so ein Kontaktieren der Leiterplatine gepaart mit einem Wegführen der elektrischen Leitung von der Drehachse besonders einfach erfolgen. Insbesondere sind dann keine Winkelstecker oder ähnliche platzraubende und schwer zu montierende Elemente erforderlich.

Erfindungsgemäß ist vorgesehen, dass die Sensoreinrichtung einen Drehmoment- und/oder Drehwinkelsensor für das drehbare Element umfasst. Hier ist die Platzersparnis besonders vorteilhaft. Die Sensoreinrichtung kann so in enge Bereiche des Kraftfahrzeugs, in welchen bereits eine Vielzahl von weiteren Bauelementen vorhanden sind, eingebaut werden und ist damit leicht mit weiteren Sensoren, welche insbesondere an demselben drehbaren Element angeordnet sind, kombinierbar.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Folgende schematische Zeichnungen zeigen:
Fig. 1 eine schematische Darstellung einer beispielhaften, nicht zur Erfindung gehörenden Sensoreinrichtung;
Fig. 2 eine schematische Darstellung von einer nicht zur Erfindung gehörenden Steckeraufnahme mit Steckerelement gemäß der in Fig. 1 gezeigten, nicht zur Erfindung gehörenden Sensoreinrichtung im nicht verbundenen Zustand;
Fig. 3 eine schematische Darstellung von einer nicht zur Erfindung gehörenden Steckeraufnahme mit Steckerelement gemäß Fig. 2 im verbundenen Zustand;
Fig. 4 eine schematische Darstellung einer weiteren beispielhaften, nicht zur Erfindung gehörenden Steckeraufnahme mit einem Steckerelement im nicht verbundenen Zustand;
Fig. 5 eine schematische Darstellung von einer nicht zur Erfindung gehörenden Steckeraufnahme mit Steckerelement gemäß Fig. 4 im verbundenen Zustand;
Fig. 6 eine schematische Darstellung einer erfindungsgemäßen Ausführungsform einer Sensoreinrichtung; und
Fig. 7 eine schematische Darstellung von einer erfindungsgemäßen Steckeraufnahme mit Steckerelement gemäß der in Fig. 6 dargestellten erfindungsgemäßen Ausführungsform einer Sensoreinrichtung.

In den Fig. werden gleiche oder funktionsgleiche Elemente mit den gleichen Bezugszeichen versehen.

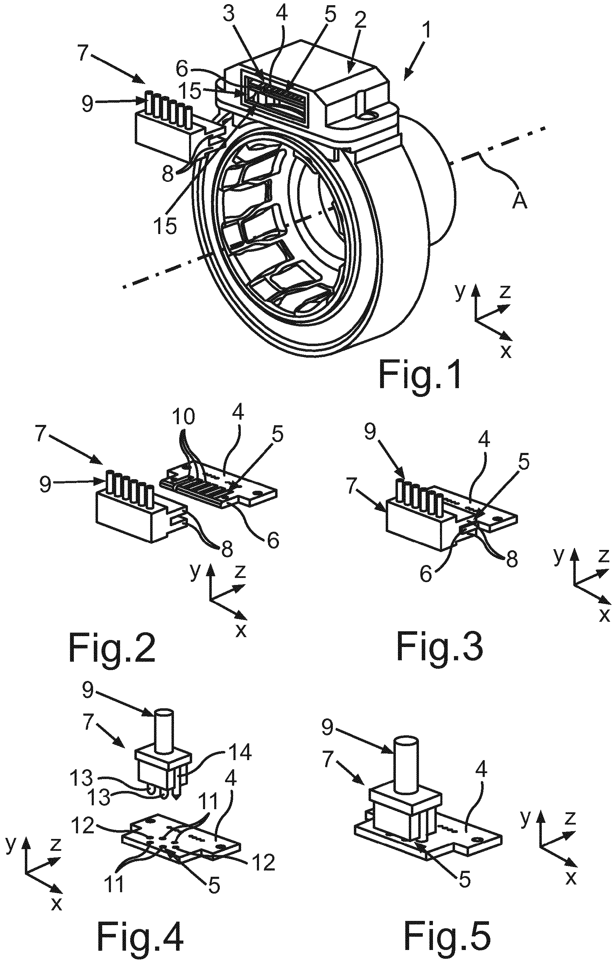

Fig. 1 zeigt eine schematische Darstellung einer beispielhaften, nicht zur Erfindung gehörenden Sensoreinrichtung 1. Diese Sensoreinrichtung 1 ist vorliegend ein Drehmoment- oder Drehwinkelsensor ausgeführt und in diesem Beispiel vorgesehen, um ein Drehmoment und einem Drehwinkel einer Lenkspindel um eine Drehachse A zu erfassen.

Die Sensoreinrichtung 1 kann aber auch zum Erfassen von Drehwinkel und/oder Drehmoment eines anderen drehbaren Elements, welches um eine Drehachse A drehbar ist, ausgeführt sein. Die Sensoreinrichtung 1 weist vorliegend ein Sensorgehäuse 2 mit einer Öffnung 3 auf. In einem Innenraum des Sensorgehäuses 2 ist im Bereich der Öffnung 3 eine Leiterplatine 4 angeordnet. Eine Steckeraufnahme 5 ist hier an einem an einen Rand 6 angrenzenden Randbereich der Leiterplatine 4 angeordnet. Die Öffnung 3 hat im gezeigten Beispiel eine rechteckige Form und ist senkrecht zur Leiterplatine 4 orientiert. Sie ist im gezeigten Beispiel parallel zur Drehachse A orientiert, sodass über ein gewinkeltes Steckerelement 7 eine elektrische Leitung radial von der Drehachse A fortgeführt werden kann. Die Leiterplatine 4 ist im gezeigten Beispiel im Bereich der Öffnung 3 mittig, von einer Außenseite des Sensorgehäuses betrachtet hinter der Öffnung 3 angeordnet, sodass durch die Öffnung 3 sowohl zu einer Unter- als auch zu einer gegenüberliegenden Oberseite der Leiterplatine 4 durchgegriffen werden kann. Die Unterseite ist hier in negative y-Richtung, die Oberseite in positive y-Richtung gerichtet.

Ebenfalls dargestellt ist ein Steckerelement 7, welches eine im vorliegenden Fall an die Öffnung 3 angepasste Form, bspw. eine rechteckige Quaderform, aufweist. An der der Sensoreinrichtung 1 zugewandten Seite des Steckerelements ist eine in x-Richtung ausgedehnte Nut vorgesehen, sodass die Quaderform zwei Schenkel 8 aufweist, zwischen welchen die Nut angeordnet ist. Diese Schenkel 8 weisen vorliegend in eine positive z-Richtung parallel zur Drehachse A zur Steckeraufnahme 5 hin. Im gezeigten Beispiel weist das Steckerelement 7 senkrecht zu den beiden Schenkeln 8, also vorliegend in y-Richtung, also nach oben, Anschlüsse 9 für eine elektrische Leitung auf.

Wird das Steckerelement 7 nun mit der Sensoreinrichtung 1 verbunden beziehungsweise auf die Leiterplatine 4 aufgesteckt, so erstrecken sich die beiden Schenkel 8 durch die Öffnung 3 an dem Rand 6 der Leiterplatine 4 vorbei an Ober- beziehungsweise Unterseite der Leiterplatine 4 an dieser entlang. Dabei ist die quaderförmige Form vorliegend an die rechteckige Öffnung 3 des Sensorgehäuses 2 angepasst, sodass das Steckerelement 7 durch seitliche Führungsflächen 15 der Öffnung 3 geführt und in Position gehalten wird. Details sind den folgenden Figuren zu entnehmen.

Fig. 2 zeigt eine schematische Darstellung von einer nicht zur Erfindung gehörenden Steckeraufnahme mit Steckerelement gemäß Fig. 1 im nicht verbundenen Zustand. Die Steckeraufnahme 5 weist hier mehrere Leiterbahnen 10 auf, welche als elektrische Kontaktflächen für das Steckerelement 7 ausgeführt sind. Diese Leiterbahnen 10 können z.B. im gleichen Verfahrensschritt wie auch weitere Leiterbahnen der Leiterplatine 4, welche nicht Teil der Steckverbindung sind, angelegt werden. Die Steckeraufnahme 5 ist hier in dem Randbereich der Leiterplatine 4 angeordnet, sodass das Steckerelement 7 mit den beiden Schenkeln 8 auf den Rand 6 zum Herstellen eines elektrischen Kontaktes zwischen den Leiterbahnen 10 der Steckeraufnahme 5 und nicht dargestellten Kontaktflächen auf der dem anderen Schenkel 8 zugewandten Innenseite von zumindest einem der Schenkel 8 aufgesteckt werden kann.

Fig. 3 zeigt eine schematische Darstellung von einer nicht zur Erfindung gehörenden Steckeraufnahme mit Steckerelement gemäß Fig. 2 im verbundenen Zustand. Die Schenkel 8 umgreifen den Rand 6 der Leiterplatine 4 hier form- und kraftschlüssig, sodass ein sicherer elektrischer Kontakt zwischen dem Steckerelement 7 und der Steckeraufnahme 5 gewährleistet ist. Zur Gewährleistung der form- und kraftschlüssigen Verbindung ist der Abstand der beiden Schenkel 8 an die Dicke der Leiterplatine 4 am Rand 6 angepasst.

Fig. 4 zeigt eine schematische Darstellung einer weiteren beispielhaften, nicht zur Erfindung gehörenden Steckeraufnahme mit einem Steckerelement im nicht verbundenen Zustand. Vorliegend ist die Steckeraufnahme 5 mit die Leiterplatine 4 durchsetzenden Kontaktöffnungen 11, 12 versehen. Zur Verbindung des Steckerelements 7 mit der Leiterplatine 4 verfügt das Steckerelement 7 entsprechend im vorliegenden Fall über Kontaktstifte 13, 14, welche in die Kontaktöffnungen 11, 12 eingesteckt werden können, um eine elektrische und mechanische Kontaktierung von der Leiterplatine 4 mit dem Steckerelement 7 zu erreichen. Im gezeigten Beispiel sind die Kontaktöffnungen 11, 12 teilweise für eine elektrische und teilweise für eine mechanische Kontaktierung ausgelegt. So sind vorliegend z.B. vier Kontaktöffnungen 11 mit einer leitenden Schicht versehen und mit zugeordneten, nicht dargestellten Leiterbahnen der Leiterplatine 4 elektrisch gekoppelt, und zwei Kontaktöffnungen 12 ledigliche Bohrungen ohne eine elektrische Funktion. Entsprechend verfügt das Steckerelement 7 hier über elektrisch leitende Kontaktstifte 13, welche elektrisch gekoppelt sind mit den elektrischen Anschlüssen 9, und über mechanische Kontaktstifte 14, welche im gezeigten Beispiel nicht mit den elektrischen Anschlüssen 9 verbunden sind. Die Kontaktöffnungen 11, 12 und die Kontaktstifte 13, 14 sind hier aufeinander abgestimmt, sodass das Steckerelement 7 auf die Leiterplatine 4 unter Herstellung einer elektrischen Verbindung zwischen den jeweiligen Kontaktöffnungen 11 und Kontaktstiften 13 sowie einer mechanischen Verbindung zwischen den Kontaktöffnungen 12 und den Kontaktstiften 14 hergestellt wird. Ist die Leiterplatine 4 wie in Fig. 1 gezeigt orientiert, so bietet sich bei der vorliegenden Ausführungsform von Steckeraufnahme 5 und Steckerelement 7 entsprechend eine senkrecht zur Drehachse A orientierte Öffnung 3 in dem Sensorgehäuse 2 an.

Fig. 5 zeigt eine schematische Darstellung von einer nicht zur Erfindung gehörenden Steckeraufnahme mit Steckerelement gemäß Fig. 4 in einem verbundenen Zustand. Das Steckerelement 7 ist hier mit seinen Kontaktstiften 13, 14 in die Kontaktöffnungen 11, 12 eingesteckt. Diese Form der Steckeraufnahme 5 erlaubt hier eine kraftschlüssige Verbindung zwischen Steckerelement 7 und Leiterplatine 4, welche vor allem bei mechanischen Belastungen parallel zur Ebene der Leiterplatine 4 stabil ist.

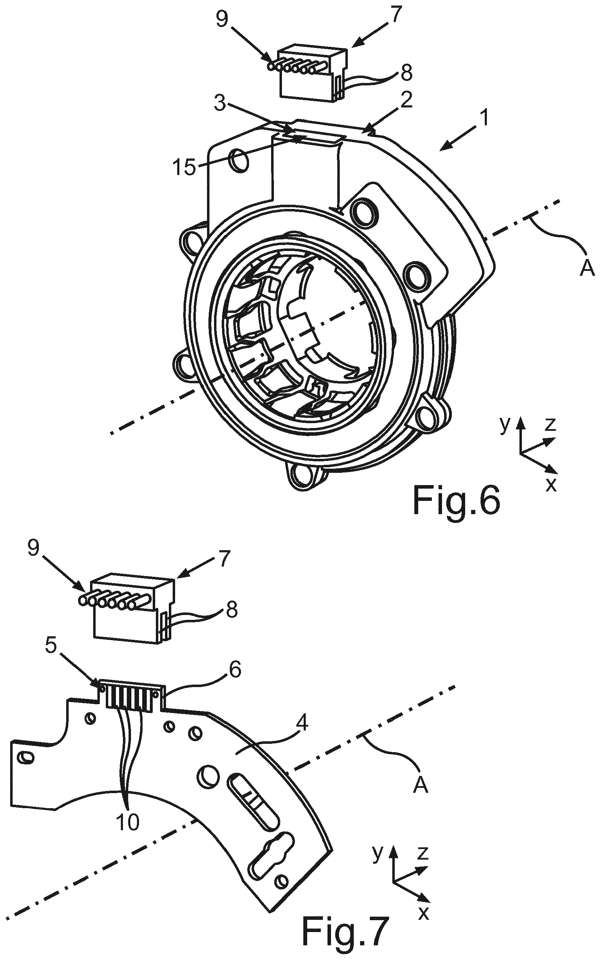

Fig. 6 zeigt eine schematische Darstellung einer erfindungsgemäßen Ausführungsform einer Sensoreinrichtung. Vorliegend dient die gezeigte Sensoreinrichtung 1 zur Ermittlung von Parametern eines relativ zur Sensoreinrichtung 1 um eine Drehachse A drehbaren Elements. Dieses drehbare Element ist hier nicht dargestellt. In der gezeigten Ausführungsform verfügt die Sensoreinrichtung 1 über eine Leiterplatine 4, welche sich hauptsächlich in einer x-y-Ebene senkrecht zur Drehachse A erstreckt, und über ein entsprechendes Sensorgehäuse 2. Als Folge ist der Raumbedarf der Sensoreinrichtung 1 in Richtung der Drehachse A, also in z-Richtung, besonders gering. Das Sensorgehäuse 2 weist hier ähnlich der in Fig. 1 gezeigten Ausführungsform eine rechteckige Öffnung 3 auf, durch welche das Steckerelement 7 mit seinen beiden Schenkeln 8 auf eine in der gezeigten Ansicht nicht sichtbare Leiterplatine 4 aufgesteckt werden kann. Diese Öffnung 3 ist im gezeigten Beispiel senkrecht zur Drehachse A orientiert und in weitest möglichem Abstand von der Drehachse A an dem Sensorgehäuse 2 angeordnet. Dies ist bei der Montage vorteilhaft.

Die Öffnung 3 ist im gezeigten Beispiel durch ein Zusammenfügen von zwei Sensorgehäuse-Halbschalen mit jeweiligen Aussparungen realisiert. Durch das Aufstecken des Steckerelements 7 auf die Leiterplatten 4 durch die Öffnung 3 wird im gezeigten Beispiel die Öffnung 3 verschlossen, wobei das Steckerelement 7 durch seitliche Führungsflächen 15 der Öffnung 3 in einer vorgegebenen Position fixiert wird.

Fig. 7 zeigt eine schematische Darstellung einer erfindungsgemäßen Steckeraufnahme mit Steckerelement gemäß der in Fig. 6 gezeigten Ausführungsform. Zum besseren Verständnis sind sowohl das Steckerelement 7 als auch die Leiterplatine 4 relativ zur Drehachse A in der gleichen Position gezeichnet, wie sie auch in Fig. 6 dargestellt ist. Entsprechend ist die Leiterplatine 4 in einer x-y-Ebene senkrecht zur Drehachse A, welche in z-Richtung verläuft, orientiert. Dadurch weist der Rand 6 der Leiterplatine 4 im gezeigten Beispiel nach oben in y-Richtung und bietet sich so für eine platzsparende Realisierung der Steckeraufnahme 5 mit im gezeigten Beispiel mehreren Leiterbahnen 10 als Kontaktfläche für das Steckerelement 7 an.

Wird das Steckerelement 7 nun in negativer y-Richtung, also nach unten, auf die Leiterplatine 4 aufgesteckt, so umschließen die beiden Schenkel 8 die Leiterplatine 4 in einem Randbereich, also nahe des Randes 6 der Leiterplatine 4. Wie bereits in den Fig. 2 und 3 verdeutlicht, kann so eine zuverlässige und genaue, insbesondere kraft- und formschlüssige Steckverbindung realisiert werden. Die Orientierung der Leiterplatine 4 senkrecht zur Drehachse A in Kombination mit einem Aufstecken des Steckerelements 7 auf den Rand 6 der Leiterplatine 4 als Steckeraufnahme 5 ermöglicht hier eine besonders bauraumsparende Sensoreinrichtung 1 mit einer Steckverbindung, die mit besonders wenigen Teilen auskommt und somit einfach aufgebaut ist.

## Patentansprüche

1. Sensoreinrichtung (1) für ein Kraftfahrzeug zur Ermittlung von Parametern eines relativ zu dieser Sensoreinrichtung (1) drehbaren Elements, welches eine Lenkspindel einer Lenksäule ist, wobei die Sensoreinrichtung (1) ein Drehmoment- und/oder Drehwinkelsensor für das drehbare Element ist, mit einem Sensorgehäuse (2), mit einer Aufnahme zur Aufnahme einer Lenkspindel einer Lenksäule, mit einer elektrischen Leitung, mit einer Leiterplatte (4), mit einer Steckeraufnahme (5) und mit einem Steckerelement (7), über welches die elektrische Leitung unter Ausbildung einer Steckverbindung mit der Steckeraufnahme (5) auf Seiten der Leiterplatine (4) elektrisch verbunden ist, wobei die Steckeraufnahme (5) an der Leiterplatine (4) vorgesehen und das Steckerelement (7) unmittelbar mit der Leiterplatine (4) elektrisch verbunden ist, und die Steckeraufnahme (5) eine mit dem Steckerelement (7) elektrisch kontaktierte Leiterbahn (10) der Leiterplatine (4) umfasst, insbesondere eine geätzte und/oder mittels eines fotolithografischen Verfahrens geformte Leiterbahn (10), und die Steckeraufnahme (5) in einem Randbereich der Leiterplatine (4) angeordnet ist, und das Steckerelement (7) den Randbereich der Leiterplatine (4) mit jeweiligen Schenkeln (8) umgreift,
wobei das Sensorgehäuse (2) der Sensoreinrichtung (1) eine Öffnung (3) umfasst, durch welche das Steckerelement (7) auf die Leiterplatine (4) aufsteckbar ist, **dadurch gekennzeichnet, dass**
die Leiterplatine (4) derart relativ zur Aufnahme angeordnet ist, so dass die Leiterplatine (4) im Wesentlichen senkrecht zur Drehachse (A) des drehbaren Elements orientiert ist.

2. Sensoreinrichtung (1) nach Anspruch 1,
**dadurch gekennzeichnet, dass**
das Steckelement (7) einen Kontaktstift (13, 14) aufweist und die Steckeraufnahme (5) wenigstens eine die Leiterplatine (4) durchsetzende Kontaktöffnung (11, 12) umfasst, in welche der Kontaktstift (13, 14) eingesteckt ist.

3. Sensoreinrichtung (1) nach Anspruch 1,
**dadurch gekennzeichnet, dass**
die Öffnung (3) seitliche Führungsflächen (15) für das Steckerelement (7) aufweist.

## Claims

1. Sensor device (1) for a motor vehicle for determining parameters of an element which is rotatable in relation to said sensor device (1) and is a steering spindle of a steering column, the sensor device (1) being a torque sensor and/or a rotary angle sensor for the rotatable element, with a sensor housing (2), with a mount for receiving a steering spindle of a steering column, with an electrical lead, with a printed circuit board (4), with a connector socket (5) and with a connector element (7), by way of which the electrical lead is electrically connected to form a plug-in connection with the connector socket (5) on the printed circuit board (4), the connector socket (5) being provided on the printed circuit board (4) and the connector element (7) being electrically connected directly to the printed circuit board (4), and the connector socket (5) comprising a conductor track (10) of the printed circuit board (4) that is in electrical contact with the connector element (7), in particular a conductor track (10) that is etched and/or is formed by means of a photolithographic process, and the connector socket (5) being arranged in an edge region of the printed circuit board (4), and the connector element (7) reaching around the edge region of the printed circuit board (4) with respective legs (8), the sensor housing (2) of the sensor device (1) comprising an opening (3), through which the connector element (7) can be fitted onto the printed circuit board (4),
**characterized in that**
the printed circuit board (4) is arranged in relation to the socket in such a way that the printed circuit board (4) is oriented substantially perpendicularly to the axis of rotation (A) of the rotatable element.

2. Sensor device (1) according to Claim 1,
**characterized in that**
the connector element (7) has a contact pin (13, 14) and the connector socket (5) comprises at least one contact opening (11, 12), which passes through the printed circuit board (4) and in which the contact pin (13, 14) is inserted.

3. Sensor device (1) according to Claim 1,
**characterized in that**
the opening (3) has lateral guiding areas (15) for the connector element (7).

## Revendications

1. Dispositif de détection (1) pour un véhicule automobile permettant de déterminer des paramètres d'un élément rotatif par rapport à ce dispositif de détection (1) qui est un arbre de direction d'une colonne de direction, le dispositif de détection (1) étant un capteur de couple et/ou un capteur d'angle de rotation pour l'élément rotatif, comprenant un boîtier de capteur (2), comprenant un logement pour loger un arbre de direction d'une colonne de direction, comprenant une ligne électrique, comprenant une carte de circuits imprimés (4), comprenant un connecteur femelle (5) et un connecteur mâle (7) par lequel la ligne électrique est reliée électriquement du côté de la platine de circuits imprimés (4) en réalisant une connexion par enfichage avec le connecteur femelle (5), dans lequel le connecteur femelle (5) est prévu sur la platine de circuits imprimés (4) et le connecteur mâle (7) est relié électriquement directement à la platine de circuits imprimés (4), et le connecteur femelle (5) comprend une piste conductrice (10), en contact électrique avec le connecteur mâle (7), de la platine de circuits imprimés (4), en particulier une piste conductrice (10) gravée et/ou formée au moyen d'un procédé photolithographique, et le connecteur femelle (5) est disposé dans une zone de bord de la platine de circuits imprimés (4), et le connecteur mâle (7) entoure la zone de bord de la platine de circuits imprimés (4) par des branches respectives (8), dans lequel le boîtier de capteur (2) du dispositif de détection (1) comprend un orifice (3) à travers lequel le connecteur mâle (7) peut être enfiché sur la platine de circuits imprimés (4), **caractérisé en ce que** la platine de circuits imprimés (4) est disposée par rapport au logement de telle sorte que la platine de circuits imprimés (4) est orientée de manière substantiellement perpendiculaire à l'axe de rotation (A) de l'élément rotatif.

2. Dispositif de détection (1) selon la revendication 1, **caractérisé en ce que** le connecteur mâle (7) présente une fiche de contact (13, 14), et le connecteur femelle (5) comprend au moins un orifice de contact (11, 12) traversant la platine de circuits imprimés (4) et dans lequel est insérée la fiche de contact (13, 14).

3. Dispositif de détection (1) selon la revendication 1, **caractérisé en ce que** l'orifice (3) présente des surfaces de guidage latérales (15) pour le connecteur mâle (7).
